# FASCICULE DE BREVET EUROPEEN

(11) **EP 1 034 962 B1**
(45) Date de publication et mention de la délivrance du brevet: **04.05.2005**
(21) Numéro de dépôt: 00400660.7
(22) Date de dépôt: 10.03.2000
(51) Int. Cl.: B60K 31/00, B60T 7/12, B60K 41/20, B60K 41/28

(54) **Dispositif et procédé de régulation de distance de véhicules**
Abstandsbezogenes Fahrgeschwindigkeitsregelsystem
Apparatus and method for control of inter-vehicle spacing

(30) Priorité: 12.03.1999 FR 9903068
(43) Date de publication de la demande: 13.09.2000
(73) Titulaire: Renault s.a.s., 92100 Boulogne Billancourt (FR)
(72) Inventeur: Hamidi, Massoud, 92380 Garches (FR); Toffolo, Gabriel, 91140 Villejust (FR)

(56) Documents cités:
- EP-A- 0 448 756
- DE-A- 2 334 904
- US-A- 5 689 422
- US-A- 5 864 285

## Description

La présente invention se rapporte à la régulation de vitesse et de distance des véhicules routiers.

Plus précisément, elle concerne un procédé et un dispositif de régulation de distance d'un véhicule équipé d'une boîte de vitesse manuelle.

Un régulateur de vitesse permet de rouler à une vitesse de croisière, choisie par le conducteur, sans avoir à maintenir le pied sur l'accélérateur.

Un régulateur de distance comprend généralement un régulateur de vitesse, et offre donc toujours la possibilité au conducteur de sélectionner une vitesse de croisière. Toutefois, il permet, en outre, de garder, de manière automatique, une distance de sécurité avec un véhicule précédant le véhicule du conducteur.

Les régulateurs de vitesse et de distance équipent habituellement des véhicules possédant une boîte de vitesse automatique. Le calculateur de la boîte de vitesse choisit automatiquement le rapport de vitesse adapté à l'allure du véhicule. La publication FR9504155 décrit un tel régulateur de distance équipant un véhicule doté d'une boîte de vitesse automatique.

Certains régulateurs de vitesse peuvent également équiper des véhicules à boîte de vitesse manuelle. Leur utilisation concernent essentiellement des trajets n'impliquant pas de grandes variations de vitesse du véhicule, par exemple des trajets sur autoroutes. Le conducteur enclenche le rapport de vitesse adapté à la vitesse de croisière choisie, et tant que la vitesse du véhicule reste proche de la vitesse de croisière, le conducteur n'a pas à changer de rapport. Cependant, s'il est amené à le faire, le système de régulation est généralement désactivé par une action sur la pédale d'embrayage, tel que divulgué dans le document US 5 689 422. Le conducteur doit donc réactiver le régulateur après chaque changement de rapport de vitesse. Ce qui peut être très contraignant lors d'un trafic perturbé, où de fréquents changements de rapport sont nécessaires.

Un tel régulateur de distance n'est pas utilisable dans des conditions de trafic où les vitesses relatives entre les véhicules évoluent rapidement, car, pour le conducteur d'un véhicule équipé d'une boîte de vitesse manuelle, ceci implique, régulièrement, des changements de rapport de vitesse.

En effet, si le conducteur a activé le régulateur de distance, celui-ci risque de commandé un régime moteur inadapté (sous régime ou sur régime) avec le rapport de vitesse engagé, puisque ce rapport n'évolue plus automatiquement en fonction du régime moteur comme pour une boîte de vitesse automatique. De plus, il n'est pas possible d'envisager une désactivation du régulateur de distance lors d'un changement de rapport, car ceci pourrait provoquer l'interruption d'un ralentissement piloté automatiquement par le régulateur de distance, à l'approche d'un obstacle par exemple, et donc être excessivement dangereux.

L'invention vise à gérer le fonctionnement d'un régulateur de distance sur une voiture équipée d'une boîte de vitesse manuelle.

Dans ce but, elle propose un procédé de régulation de distance d'un véhicule équipé d'une boîte de vitesse manuelle selon la revendication 1.

De façon avantageuse, lorsque le conducteur débraye, un régime moteur, adapté au rapport de vitesse engagé par le conducteur, est commandé avant la fin du débrayage.

De préférence, lorsque la transmission est embrayée, et que le régime moteur dépasse un premier seuil préétabli pour chaque rapport de vitesse, l'augmentation du régime moteur est réduite, ou bien l'augmentation du régime moteur s'arrête après le dépassement d'un second seuil.

Lorsque la transmission est embrayée, et que le régime moteur n'est pas inclus dans une plage de régime moteur optimale, relative au rapport de vitesse engagé, le régulateur informe le conducteur sur le changement de rapport de vitesse à réaliser.

L'invention propose aussi un dispositif de régulation de distance selon la revendication 6.

Ce capteur de pédale d'embrayage peut être un interrupteur ou un potentiomètre sur la pédale d'embrayage, adapté, en outre, pour déterminer si la pédale est sur le point d'être relâchée.

Enfin, le dispositif peut comporter un capteur de vitesse de rotation d'arbre d'entrée de boîte vitesse.

D'autres caractéristiques et avantages de l'invention apparaîtront à la lecture de la description qui va suivre d'un mode de réalisation, donné à titre d'exemple non limitatif, en référence aux dessins annexés dans lesquels :
- la figure 1 illustre l'utilisation d'un régulateur de distance par un véhicule automobile,
- la figure 2 présente, de façon schématique, le dispositif selon l'invention,
- la figure 3 présente, sous forme d'un diagramme, le procédé selon l'invention,
- la figure 4 présente, sous forme d'un diagramme, une variante du procédé selon l'invention.

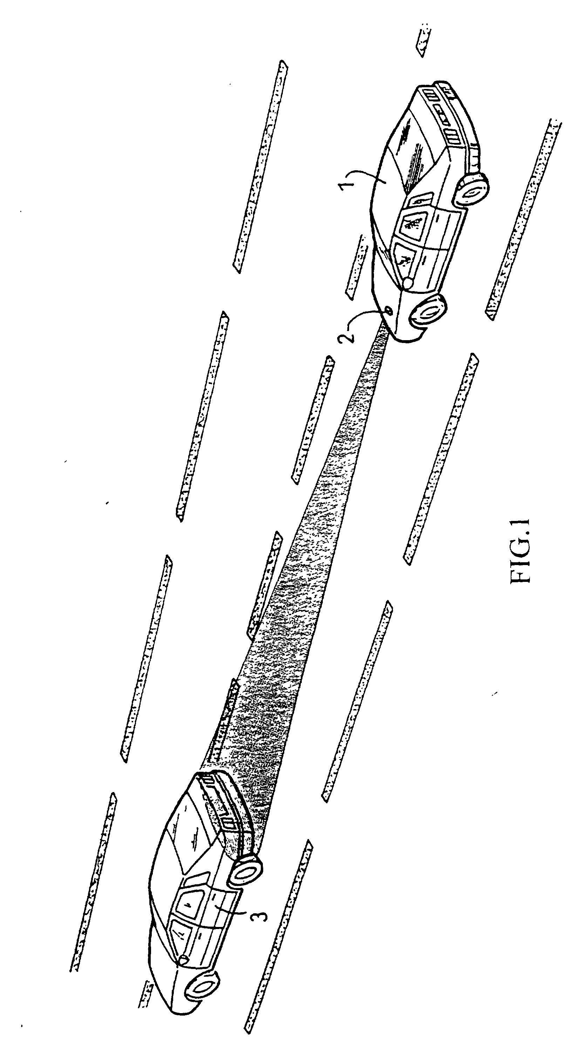

Sur la figure 1, on a représenté un premier véhicule 1, ou véhicule suiveur, équipé d'un télémètre 2, par exemple du type LIDAR (Light Detection And Ranging), dans le champ duquel est situé un second véhicule, ou véhicule suivi 3.

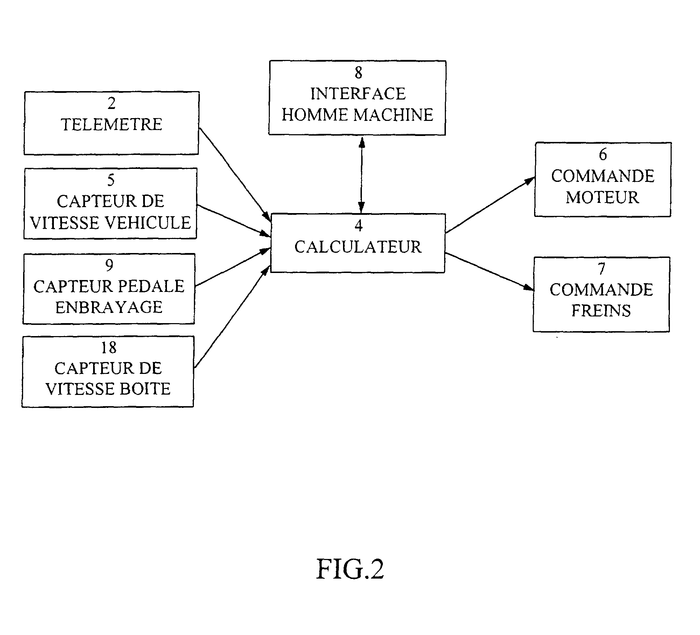

Le véhicule suiveur 1, équipé d'une boîte de vitesse manuelle comporte un régulateur de distance. Ce régulateur, représenté sur la figure 2, se compose, classiquement du télémètre 2, mentionné ci-dessus, relié à un calculateur 4, lui-même connecté à au moins un capteur de vitesse embarqué 5, à un organe de contrôle du papillon des gaz 6, à un système de commande de freinage 7 et à une interface homme machine 8.

L'organe de contrôle de papillon d'admission des gaz 6 peut être remplacé par un organe de contrôle de l'injection de carburant, en particulier dans le cas d'un moteur Diesel.

L'interface homme machine 8 peut comporter, par exemple, un afficheur d'informations situé sur le tableau de bord, ou bien un système d'affichage tête haute (Head Up Display) placé sur le pare-brise.

Le fonctionnement classique d'un régulateur de distance est le suivant. Le calculateur 4 reçoit du télémètre 2 une information sur la distance d'un éventuel obstacle et la vitesse relative entre le véhicule et ledit obstacle, du capteur de vitesse 5, une information sur la vitesse du véhicule, et de l'interface homme machine 8 des consignes du conducteur, telles que le choix d'une vitesse de consigne. Il retransmet au conducteur des informations, par exemple, sous forme de signaux d'alerte sonores ou visuels, et donne à l'organe de commande des papillons des gaz 6 une consigne d'ouverture, et au système de commande de freinage 7, une consigne de pression de freinage par exemple.

Le dispositif comporte des moyens, reliés au calculateur 4, pour déterminer si la pédale d'embrayage est enclenchée. Ces moyens peuvent consister en un interrupteur 9 de pédale d'embrayage, ou bien, en un potentiomètre 19 adapté pour déterminer la position de la pédale d'embrayage. La valeur du potentiomètre dépend alors de la course de la pédale.

Le dispositif peut, en outre, comporter des moyens pour permettre au calculateur 4 de déterminer quel est le rapport enclenché sur la boîte de vitesse par le conducteur, avant que la pédale d'embrayage ne soit relâchée. Ces moyens peuvent consister en un simple détecteur 17 de la position de levier de vitesse, ou bien un capteur de vitesse 18 de rotation de l'arbre en entrée de boîte de vitesse. Dans ce dernier cas, le calculateur 4 détermine le rapport engagé à partir des informations issues du capteur de vitesse de rotation d'arbre 18 en entrée de boîte de vitesse et du capteur de vitesse 5 du véhicule.

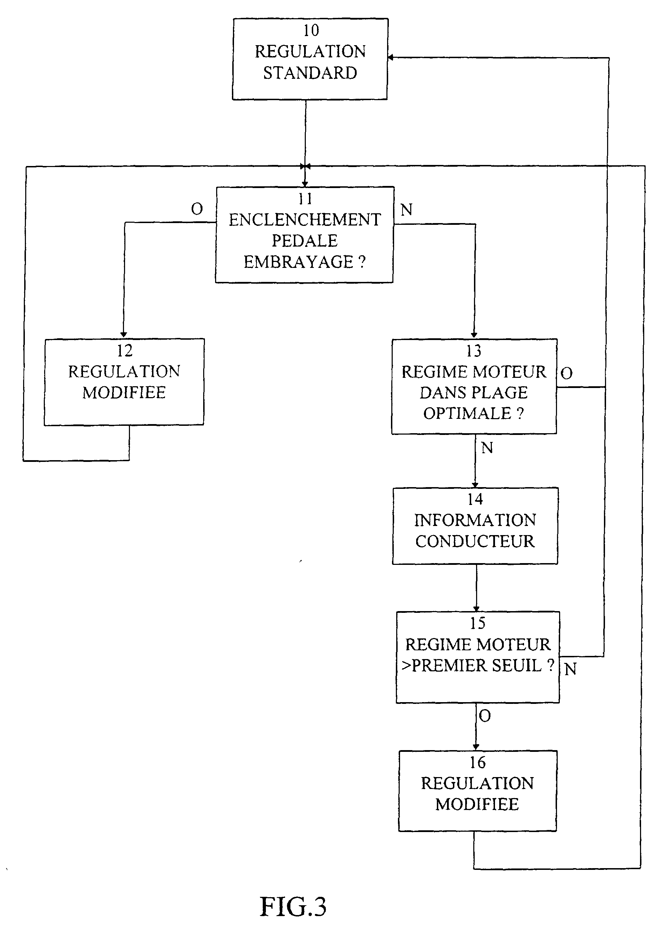

Le procédé de régulation de distance, selon l'invention, est décrit sur la figure 3. Le conducteur active le régulateur de distance, par l'intermédiaire des commandes classiques des régulateurs de distance. Le régulateur fonctionne alors de façon analogue aux régulateurs équipant les véhicules avec boîte de vitesse automatique, fonctionnement décrit ci-dessus, ce qui correspond à l'étape 10.

Le calculateur 4 détermine, à l'étape 11, au moyen de l'interrupteur 9 de pédale d'embrayage, si le conducteur appuie ou non sur la pédale d'embrayage.

Dans le cas où le conducteur a appuyé sur la pédale d'embrayage, le régulateur n'est pas désactivé. Toutefois, son fonctionnement diffère du fonctionnement habituel. En effet, à l'étape 12, le calculateur 4 réduit la commande du moteur au niveau ralenti, de façon à ne pas faire tourner le moteur dans le vide. Le calculateur 4 interrompt donc toutes commandes données à l'organe de commande 6 des papillons des gaz dès que le conducteur appuie sur la pédale d'embrayage. Par exemple, si le conducteur avait sélectionné une vitesse de croisière, et que le calculateur 4 avait commandé une augmentation de régime moteur pour parvenir à cette vitesse de croisière, la commande d'accélération est interrompue.

De plus, en fonction des informations délivrées par le télémètre 2 et les consignes fixées par le conducteur, le calculateur 4 commande si nécessaire, le système de freinage 7 pour garder une distance de sécurité avec le véhicule suivi 3.

Durant la période où la pédale d'embrayage est appuyée, le calculateur 4 peut donc décélérer, grâce au système de freinage 7, mais pas accélérer.

Le calculateur 4 détermine, grâce à l'interrupteur 9, quand la pédale d'embrayage est relâchée. Le régulateur reprend alors son fonctionnement habituel (étape 2).

Dans le cas habituel, où la pédale d'embrayage n'est pas enclenchée, le calculateur 4, à l'étape 13, détermine si, en fonction de la vitesse du véhicule, le rapport de vitesse engagé, et d'après une cartographie moteur prédéfinie, le régime moteur se trouve bien entre deux valeurs prédéfinies correspondant aux limites d'une plage d'utilisation optimale du moteur pour le rapport considéré.

Le calculateur 4 détermine le rapport engagé de façon classique, par exemple en fonction de la vitesse du véhicule et du régime moteur. Si le régime moteur se trouve dans la plage optimale, on retourne à l'étape 10, c'est-à-dire au mode de fonctionnement classique du régulateur.

Si le régime moteur ne se trouve pas dans la plage optimale, le calculateur 4, à l'étape 14, peut indiquer au conducteur, par l'intermédiaire de l'interface homme machine 8, qu'une opération de sa part est souhaitable, ou nécessaire, et éventuellement lui indiquer les opérations à effectuer. Par exemple, le calculateur 4 peut indiquer au conducteur quel rapport de vitesse devrait être engagé.

A l'étape 15, le calculateur 4 détermine si le régime moteur se trouve au delà de limite supérieure de la plage optimale de régime moteur pour le rapport de vitesse engagé. Si ce n'est pas le cas, on retourne à l'étape 10.

A l'étape 16, si le moteur est en surrégime, et si le véhicule dans une phase d'accélération, pour rejoindre une vitesse de consigne par exemple, le calculateur 4, peut maintenir l'accélération, sans toutefois commander un régime moteur supérieur à une valeur prédéfinie qui pourrait endommager prématurément le moteur.

Selon une autre possibilité, dans un cas analogue de surrégime et dans une phase d'accélération, le calculateur 4 peut diminuer la pente de l'accélération du véhicule, à partir du franchissement de la limite supérieure de la plage optimale de régime moteur. Le véhicule, dans ce cas, continuera à accélérer, le moteur étant en surrégime, de façon à ce que le conducteur ait le temps d'effectuer un changement de rapport, en particulier s'il n'est pas familier avec le dispositif. De toutes façons, il aura été prévenu de la nécessité d'un changement de rapport à l'étape 14.

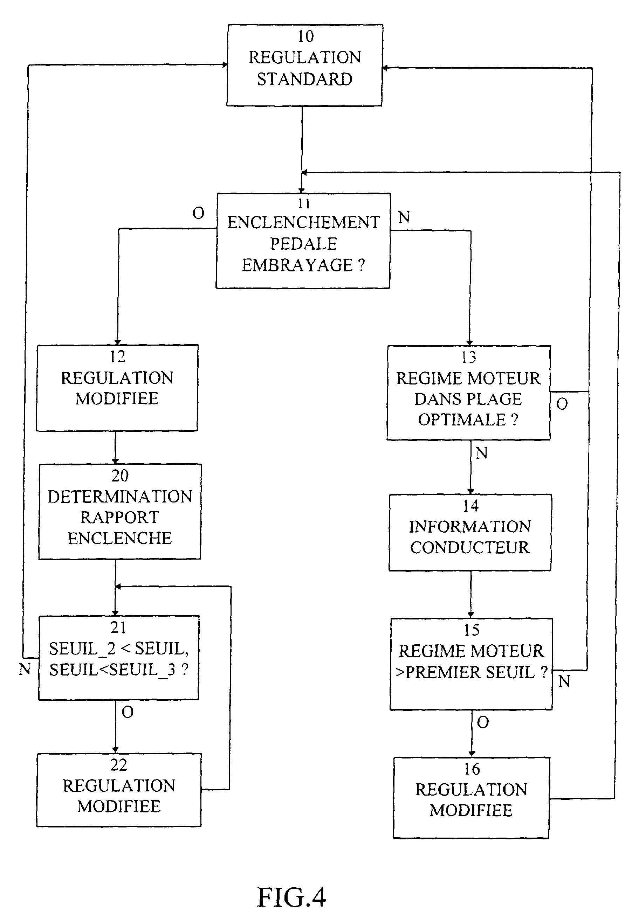

Sur la figure 4, est schématisé un procédé selon l'invention présentant des caractéristiques supplémentaires. Les étapes 10 à 16 sont les mêmes que dans le procédé décrit précédemment, la seule différence étant qu'à l'étape 11, le calculateur 4 détermine si la pédale d'embrayage est enclenchée avec le potentiomètre 9. La comparaison peut se faire par rapport à un seuil défini S 1 au delà duquel le calculateur 4 considère qu'il n'y a plus de lien mécanique entre le moteur et la boîte de vitesse manuelle.

Si le conducteur a appuyé sur la pédale d'embrayage, le calculateur 4, à l'étape 12, comme décrit précédemment, réduit le régime moteur au ralenti, et commande, si besoin est, le système de freinage 7.

A l'étape 20, la pédale d'embrayage étant toujours enclenchée, le calculateur 4 détermine quel est le rapport de vitesse enclenché, soit à partir du détecteur de la position de levier de vitesse 17, ou alors à partir des informations de la vitesse de rotation de l'arbre en entrée de boîte (issue du capteur de vitesse 18) et de la vitesse du véhicule.

A l'étape 21, le calculateur détermine en fonction de la position de la pédale d'embrayage si les disques d'embrayage vont être en contact. Pour cela, le calculateur peut comparer la valeur du potentiomètre 17 de course de la pédale d'embrayage à deux seuils prédéfinis S2 et S3, le seuil S2 correspondant un début de contact entre les disques d'embrayage, et le seuil S3 à l'absence d'appui sur la pédale d'embrayage. Si la valeur du potentiomètre est comprise entre S2 et S3, le calculateur 4 conclut que les disques d'embrayage vont être en contact.

A l'étape 22, dès que les disques commencent à être en contact, le calculateur 4 commande un régime moteur égal à la vitesse de rotation de l'arbre en entrée de boîte, donnée par le capteur de vitesse 18, ce qui assure un passage de rapport optimal, sans à-coups.

La présente invention permet donc l'utilisation de systèmes de régulation de distance, destinés de façon privilégiée aux véhicules équipés de boîte de vitesse automatique, sur des véhicules équipés de boîte de vitesse manuelle, et ce, en conservant l'essentiel du principe de fonctionnement classique d'un régulateur de distance.

## Revendications

1. Procédé de régulation de distance d'un véhicule (1) équipé d'une boîte de vitesse manuelle, **caractérisé en ce que**, lorsqu'un calculateur (4) détecte par l'intermédiaire d'un capteur d'enclenchement de pédale d'embrayage que la transmission est embrayée, et si le régime moteur dépasse un premier seuil préétabli pour chaque rapport de vitesse, l'augmentation du régime moteur est limitée, et **en ce que**, lorsque ce calculateur (4) détecte que le conducteur débraye, le régime moteur est réduit, et le système de freinage du véhicule est activé si le véhicule roule en deçà d'une distance de consigne.

2. Procédé de régulation de distance d'un véhicule (1) selon la revendication 1, **caractérisé en ce que**, lorsque le conducteur débraye, un régime moteur, adapté au rapport de vitesse engagé par le conducteur, est commandé avant la fin du débrayage.

3. Procédé de régulation de distance d'un véhicule (1) selon les revendication 1 ou 2, **caractérisé en ce que**, lorsque la transmission est embrayée, et que le régime moteur dépasse un premier seuil préétabli pour chaque rapport de vitesse, l'augmentation du régime moteur s'arrête après le dépassement d'un second seuil.

4. Procédé de régulation de distance d'un véhicule (1) selon les revendications 1 ou 2, **caractérisé en ce que**, lorsque la transmission est embrayée, et que le régime moteur dépasse un premier seuil préétabli pour chaque rapport de vitesse, l'augmentation du régime moteur est réduite.

5. Procédé de régulation de distance d'un véhicule (1) selon l'une des revendications 1 à 4, **caractérisé en ce que**, lorsque la transmission est embrayée, et que le régime moteur n'est pas inclus dans une plage de régime moteur optimale, relative au rapport de vitesse engagé, le régulateur informe le conducteur sur le changement de rapport de vitesse à réaliser.

6. Dispositif de régulation de distance d'un véhicule (1) équipé d'une boîte de vitesse manuelle, comportant un calculateur (4) recevant des signaux issus d'un télémètre (2) et d'un capteur de vitesse du véhicule (5), et relié à un système de commande du régime moteur (6), ainsi qu'à un système de commande de freinage (7), et adapté pour transmettre et recevoir des informations avec le conducteur par l'intermédiaire d'une interface homme machine (8), le calculateur (4) recevant d'une part des signaux d'un capteur d'enclenchement de pédale d'embrayage (9,17) de façon à déterminer si le conducteur du véhicule appuie sur cette pédale **caractérisé en ce que** si le capteur d'enclenchement de pédale d'embrayage signale que la pédale est appuié, le régime moteur est limité, le calculateur recevant d'autre part des signaux de moyens de détermination de rapports de vitesse (17,18) à partir desquels le calculateur (4), la pédale d'embrayage étant enclenchée, détermine le rapport de vitesse sélectionné par le conducteur sur la boîte de vitesse manuelle.

7. Dispositif de régulation de distance d'un véhicule (1) selon la revendication 6, **caractérisé en ce que** le capteur d'enclenchement de pédale d'embrayage est un interrupteur (9).

8. Dispositif de régulation de distance d'un véhicule (1) selon la revendication 6, **caractérisé en ce que** le capteur d'enclenchement de pédale d'embrayage est un potentiomètre (17) de course de pédale, adapté, en outre, pour déterminer si la pédale est sur le point d'être relâchée.

9. Dispositif de régulation de distance de véhicule (1) selon les revendications 6 à 8, **caractérisé en ce qu'**il comporte un capteur de vitesse de rotation (18) d'arbre d'entrée de boîte de vitesse.

## Patentansprüche

1. Verfahren zur Regelung des Abstands eines Fahrzeugs (1), das mit einer manuellen Gangschaltung ausgestattet ist, **dadurch gekennzeichnet, dass**, wenn ein Rechner (4) über einen Sensor der Betätigung des Kupplungspedals detektiert, dass das Getriebe angekuppelt ist, und wenn die Drehzahl des Motors einen zuvor für jeden Gang gesetzten ersten Schwellwert überschreitet, die Erhöhung der Drehzahl beschränkt wird, und dadurch, dass, wenn der Rechner (4) detektiert, dass der Fahrer auskuppelt, die Drehzahl des Motors reduziert wird und das Bremssystem des Fahrzeugs aktiviert wird, wenn das Fahrzeug diesseits eines Sollabstands fährt.

2. Verfahren zur Regelung des Abstands eines Fahrzeugs (1) nach Anspruch 1, **dadurch gekennzeichnet, dass**, wenn der Fahrer auskuppelt, eine Motordrehzahl, angepasst an den durch den Fahrer eingelegten Gang, vor dem Ende des Auskuppelns angesteuert wird.

3. Verfahren zur Regelung des Abstands eines Fahrzeugs (1) nach Ansprüchen 1 oder 2, **dadurch gekennzeichnet, dass**, wenn das Getriebe angekuppelt ist und die Motordrehzahl einen für jeden Gang gesetzten ersten Schwellwert überschreitet, die Erhöhung der Motordrehzahl nach Überschreiten eines zweiten Schwellwerts anhält

4. Verfahren zur Regelung des Abstands eines Fahrzeugs (1) nach Ansprüchen 1 oder 2, **dadurch gekennzeichnet, dass**, wenn das Getriebe angekuppelt ist und die Motordrehzahl einen für jeden Gang gesetzten ersten Schwellwert überschreitet, die Erhöhung der Motordrehzahl reduziert wird.

5. Verfahren zur Regelung des Abstands eines Fahrzeugs (1) nach einem der Ansprüche 1 bis 4, **dadurch gekennzeichnet, dass**, wenn das Getriebe angekuppelt ist und die Motordrehzahl nicht im optimalen Bereich der Motordrehzahl enthalten ist, relativ zum eingelegten Gang, der Regler den Fahrer über die vorzunehmende Änderung des Gangs informiert.

6. Vorrichtung zur Regelung des Abstands eines Fahrzeugs (1), das mit einer manuellen Gangschaltung ausgestattet ist, welche einen Rechner (4) aufweist, der Signale empfängt, die von einem Abstandsmesser (2) und von einem Geschwindigkeitsmesser des Fahrzeugs (5) herrühren, und mit einem System zur Steuerung der Motordrehzahl (6) wie auch einem System zur Steuerung der Bremsung (7) verbunden ist, und angepasst ist, mit dem Fahrer über eine Mensch-Maschine-Schnittstelle (8) Informationen zu übertragen und zu empfangen, wobei der Rechner (4) einerseits Signale eines Sensors der Betätigung des Kupplungspedals (9, 17) empfängt, um zu bestimmen, ob der Fahrer des Fahrzeugs auf dieses Pedal drückt, **dadurch gekennzeichnet, dass**, wenn der Sensor der Betätigung des Kupplungspedals signalisiert, dass das Pedal gedrückt wird, die Motordrehzahl beschränkt wird, wobei der Rechner andererseits Signale der Mittel zur Bestimmung des Gangs (17, 18) empfängt, ausgehend von welchen der Rechner (4), während das Kupplungspedal betätigt ist, den vom Fahrer mit der manuellen Gangschaltung ausgewählten Gang bestimmt.

7. Vorrichtung zur Regelung des Abstands eines Fahrzeugs (1) nach Anspruch 6, **dadurch gekennzeichnet, dass** der Sensor der Betätigung des Kupplungspedals ein Unterbrecher (9) ist.

8. Vorrichtung zur Regelung des Abstands eines Fahrzeugs (1) nach Anspruch 6, **dadurch gekennzeichnet, dass** der Sensor der Betätigung des Kupplungspedal ein Potentiometer (17) des Pedalhubs ist, außerdem angepasst, um zu bestimmen, ob das Pedal an dem Punkt ist, losgelassen zu werden.

9. Vorrichtung zur Regelung des Abstands eines Fahrzeugs (1) nach Ansprüchen 6 bis 8, **dadurch gekennzeichnet, dass** sie einen Sensor der Rotationsgeschwindigkeit (18) der Kupplungswelle am Eingang der Gangschaltung aufweist.

## Claims

1. A process for regulating the distance of a vehicle (1) fitted with a manual gearbox **characterised in that**, when a computer (4) detects by way of a clutch pedal engagement sensor that the transmission is engaged and if the engine speed exceeds a first pre-established threshold for each gear ratio, the increase in engine speed is limited, and that, when said computer (4) detects that the driver declutches, the engine speed is reduced and the braking system of the vehicle is activated if the vehicle is travelling at less than a reference distance.

2. A process for regulating the distance of a vehicle (1) according to claim 1 **characterised in that**, when the driver declutches, an engine speed suited to the gear ratio engaged by the driver is implemented before the end of clutch disengagement.

3. A process for regulating the distance of a vehicle (1) according to claim 1 or claim 2 **characterised in that**, when the transmission is engaged and the engine speed exceeds a first pre-established threshold for each gear ratio, the increase in the engine speed stops after a second threshold is exceeded.

4. A process for regulating the distance of a vehicle (1) according to claim 1 or claim 2 **characterised in that**, when the transmission is engaged and the engine speed exceeds a first pre-established threshold for each gear ratio, the increase in the engine speed is reduced.

5. A process for regulating the distance of a vehicle (1) according to one of claims 1 to 4 **characterised in that**, when the transmission is engaged and the engine speed is not included in an optimum engine speed range relative to the gear ratio engaged, the regulator notifies the driver about the gear change to be effected.

6. Apparatus for regulating the distance of a vehicle (1) fitted with a manual gearbox comprising a computer (4) receiving signals from a rangefinder (2) and a vehicle speed sensor (5) and connected to a system (6) for controlling the engine speed and to a braking control system (7) and adapted to transmit and receive items of information with the driver by way of a man-machine interface (8), the computer (4) receiving on the one hand signals from a clutch pedal engagement sensor (9, 17) so as to determine if the driver of the vehicle is pressing on said pedal **characterised in that** if the clutch pedal engagement sensor signals that the pedal is depressed the engine speed is limited, the computer receiving on the other hand signals from gear ratio determining means (17, 18) from which the computer (4), the clutch pedal being engaged, determines the gear ratio selected by the driver in the manual gearbox.

7. Apparatus for regulating the distance of a vehicle (1) according to claim 6 **characterised in that** the clutch pedal engagement sensor is a switch (9).

8. Apparatus for regulating the distance of a vehicle (1) according to claim 6 **characterised in that** the clutch pedal engagement sensor is a pedal travel potentiometer (17) which is also adapted to determine if the pedal is on the point of being released.

9. Apparatus for regulating the distance of a vehicle (1) according to claims 6 to 8 **characterised in that** it comprises a sensor (18) for detecting a gearbox input shaft speed of rotation.
